# EUROPEAN PATENT APPLICATION

(11) **EP 2 474 946 A1**
(43) Date of publication of application: **11.07.2012**
(21) Application number: 11196104.1
(22) Date of filing: 29.12.2011
(51) Int. Cl.: G06Q 30/02, G06Q 30/06, H04W 88/00

(54) **Method for providing application at discounted price through voting in mobile platform**

(30) Priority: 11.01.2011 KR 20110002682
(71) Applicant: NCSoft Corporation, Gangnam-gu, Seoul 135-090 (KR)
(72) Inventor: Oh, Han Jin, 331-210 Chungcheongnam-do (KR); Song, Jun Seo, 431-746 Geyonggi-do (KR); Cho, Jennifer Moon Young, 120-190 Seoul (KR)
(74) Representative: Jansen, Cornelis Marinus

(57) **Abstract**

A method for providing an application at a discounted price through voting in a mobile platform is provided. The method may include providing, by a server, a smartphone with a predetermined voting period or information on at least one target application targeted for voting, the smartphone accessing the server via a network, displaying, by the smartphone, the received information on the at least one target application on a screen, providing, by the smartphone, a selection value to the server based on a selection by a user of one of the at least one target application, counting, by the server, at least one vote based on at least one selection value received from at least one smartphone, and selecting at least one application from among the at least one target application based on a result of the counting, when the predetermined voting period elapses, and pushing, by the server, a message including information on the selected application to the at least one smartphone.

## Description

### CROSS-REFERENCE TO RELATED APPLICATION

This application claims the benefit of Korean Patent Application No. 10-2011-0002682, filed on January 11, 2011, in the Korean Intellectual Property Office, the disclosure of which is incorporated herein by reference.

### BACKGROUND

### 1. Field of the Invention

The present invention relates to a method for providing an application for smartphones at a discounted price.

### 2. Description of the Related Art

Among games for single player, auxiliary services enabling sharing of information among users or displaying a ranking of users are beginning to emerge. OpenFeint, Plus+, and the like are currently being used as platforms used to provide the services.

The platforms may be understood as combinations of games and social networks.

Additionally, applications for smartphones are being sold in the world at relatively very low prices, and may be sold at discounted prices during a predetermined period of time, for promotional purposes. This phenomenon is very common in the smartphone market, and a large number of applications used to notify information regarding discounted applications are separately appearing.

When application discount information and a social network are combined, synergy may be expected to be further maximized. Accordingly, there is a need to find a methodology for realizing the synergy.

### SUMMARY

According to an aspect of the present invention, there is provided a method for providing an application at a discounted price through voting in a mobile platform, including: providing, by a server, a smartphone with a predetermined voting period or information on at least one target application targeted for voting, the smartphone accessing the server via a network; displaying, by the smartphone, the received information on the at least one target application on a screen; providing, by the smartphone, a selection value to the server based on a selection by a user of one of the at least one target application; counting, by the server, at least one vote based on at least one selection value received from at least one smartphone, and selecting at least one application from among the at least one target application based on a result of the counting, when the predetermined voting period elapses; and pushing, by the server, a message including information on the selected application to the at least one smartphone.

According to another aspect of the present invention, there is provided a method for providing an application at a discounted price through voting in a mobile platform, including: providing, by a server, a smartphone with a predetermined voting period or information on at least one target application targeted for voting, the smartphone accessing the server via a network; storing, by the server, a selection value when the selection value is received from the smartphone based on a selection by a user of one of the at least one target application; counting, by the server, at least one vote based on at least one pre-stored selection value received from at least one smartphone, and selecting at least one application from among the at least one target application based on a result of the counting, when the predetermined voting period elapses; and generating, by the server, a message including information on the selected application, and pushing the generated message to the at least one smartphone.

According to still another aspect of the present invention, there is provided a method for providing an application at a discounted price through voting in a mobile platform, including: displaying, by a smartphone, on a screen, information on at least one target application targeted for voting, when the information is provided from a server; providing, by the smartphone, the server with a selection value based on a selection by a user of one of the at least one target application, and further providing the server with information regarding whether to receive a push notification determined by the user; and parsing, by the smartphone, a message including information on an application selected based on at least one selection value received from at least one smartphone, and displaying the parsed message on the screen, when the message is pushed from the server.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a network configuration to explain a connection relationship among at least one smartphone, a server, and a push notification server according to the present invention;
FIGS. 2A through 2C are diagrams illustrating examples of a screen to explain an operation of voting using a smartphone according to the present invention;
FIG. 3 is a flowchart illustrating a method for providing an application at a discounted price through voting in a mobile platform according to the present invention;
FIG. 4 is a flowchart illustrating the method of FIG. 3, from the perspective of a server; and
FIG. 5 is a flowchart illustrating the method of FIG. 3, from the perspective of a smartphone.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

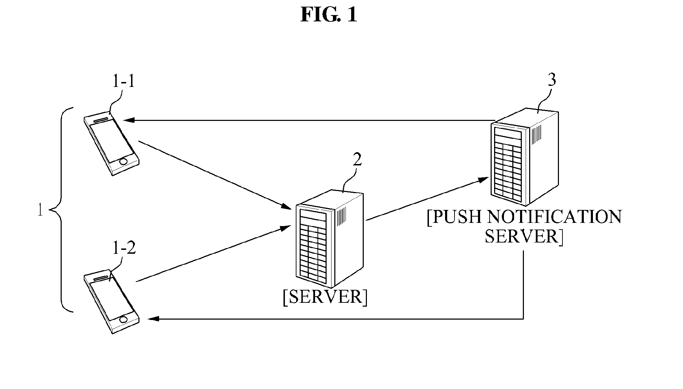

FIG. 1 is a diagram illustrating a network configuration to explain a connection relationship among smartphones, a server, and a push notification server according to the present invention.

As shown in FIG. 1, when an application used to receive data from a server 2 and display the received data is launched, one of a plurality of smartphones 1 may access the server 2 via a network, and may receive data from the server 2. The network may include, for example, a wireless Internet network or a 3^{rd} generation (3G) network.

When the smartphone 1 accesses the server 2, the server 2 may receive a device token from the smartphone 1, may identify the smartphone 1, and may provide a variety of data. Additionally, when the smartphone 1 meets predetermined requirements despite not accessing the server 2, the server 2 may push a predetermined message to the smartphone 1.

Accordingly, the server 2 may generate a message that is to be pushed to the smartphone 1, and may transmit the generated message to the push notification server 3, so that pushing may be performed through communication between the push notification server 3 and the smartphone 1.

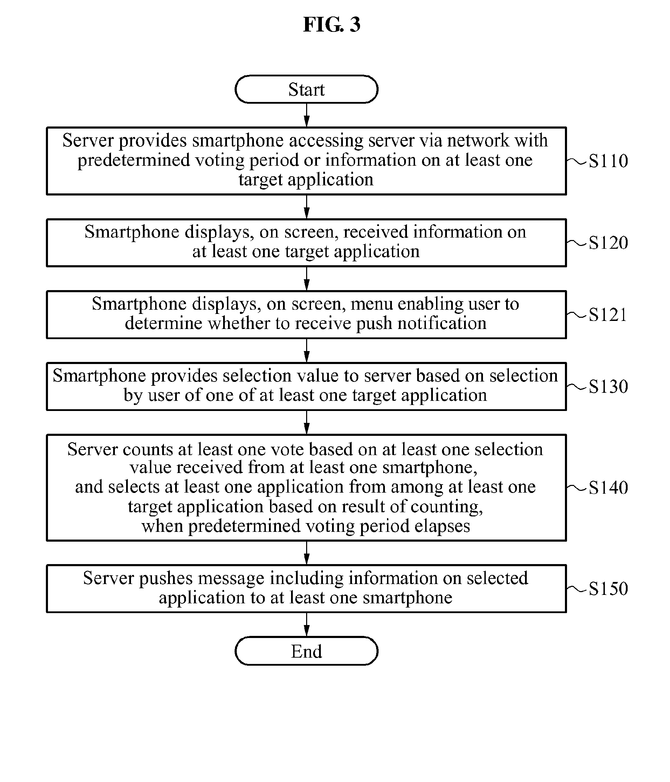

FIG. 3 is a flowchart illustrating a method for providing an application at a discounted price through voting in a mobile platform according to the present invention.

In the method of FIG. 3, candidate applications to be sold at discounted prices for every predetermined period of time may be selected, and the plurality of smartphones 1 may be caused to vote, so that an application to be sold at a discounted price may be finally determined.

First, in operation S110, the server 2 may provide a predetermined voting period or information on at least one target application targeted for voting, to the smartphone 1 that accesses the server 2 via the network, for example the wireless Internet network or 3G network.

For example, an application to be sold at a discounted price may be determined every week through voting. In this example, voting may be performed during weekdays, and the application may be sold at the discounted price for the weekend.

Additionally, in the next week, another target application may be selected, and voting and selling may be repeated.

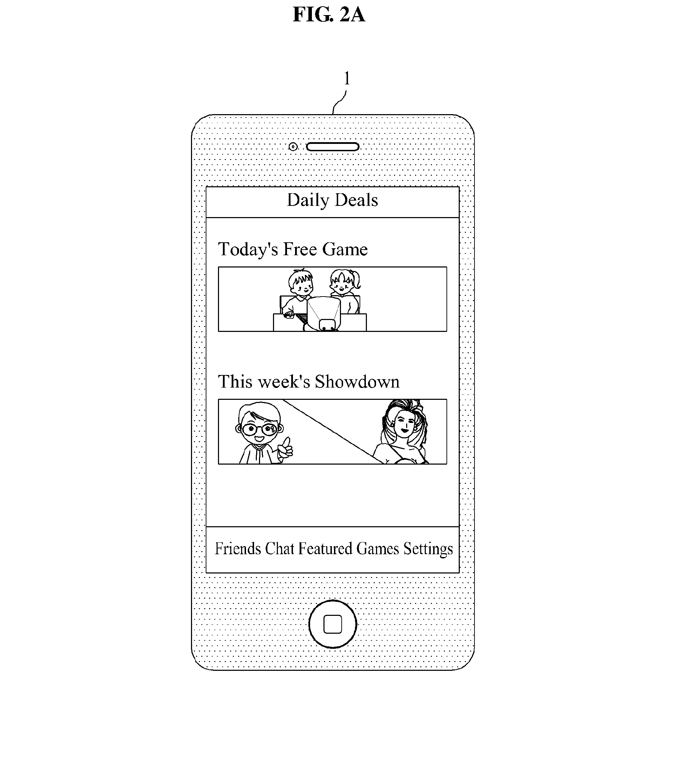

The smartphone 1 may change a start screen of a game application to a screen used to access a platform provided by the server 2, or may access the server 2 through a separate application for smartphones. The smartphone 1 may display, on the screen, a list of target applications targeted for voting, as shown in FIG. 2A in operation S120. Additionally, a voting period may also be displayed.

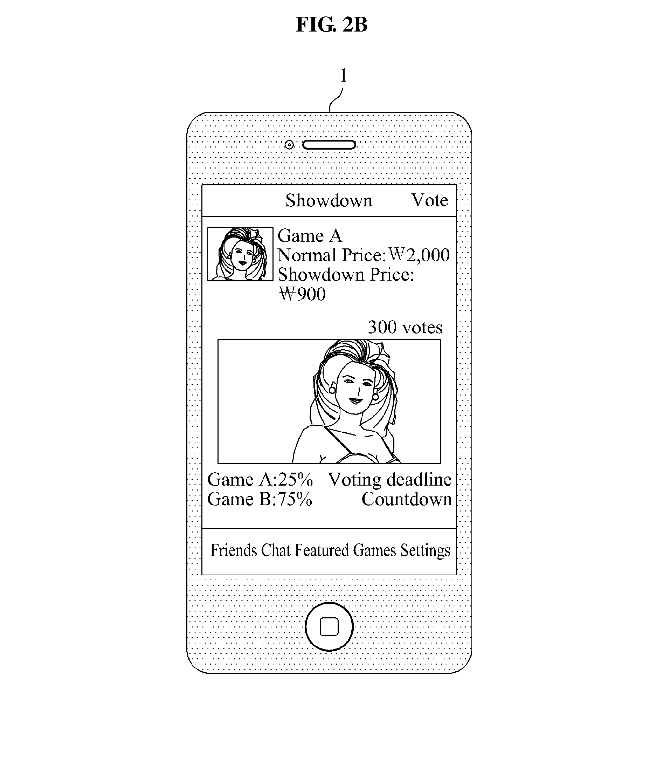

A user may select a target application from among the target applications displayed on the screen, and the smartphone 1 may display detailed information of the selected target application, as shown in FIG. 2B.

When the user selects the target application by touching a "Vote" button on an upper right portion of the screen, as shown in FIG. 2B, the smartphone 1 may provide the server 2 with a selection value indicating which target application is selected by the user in operation S130.

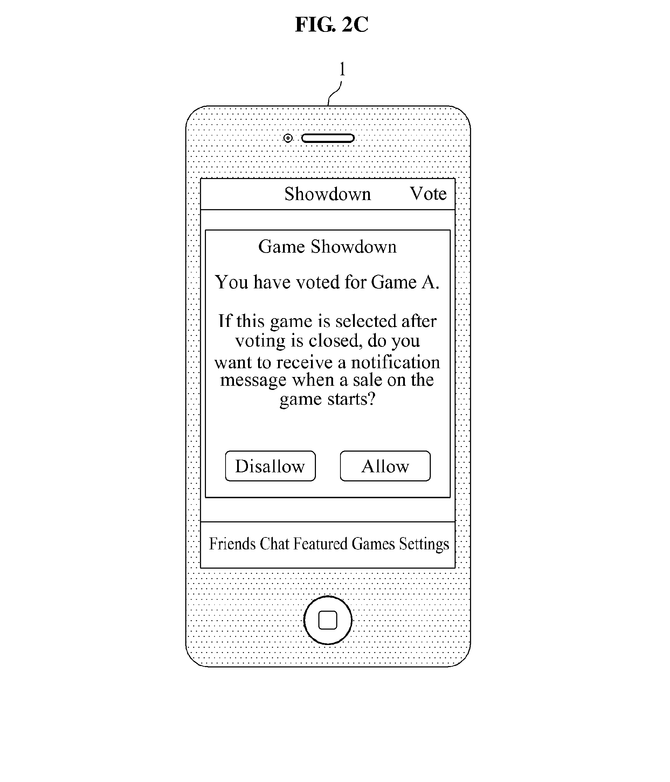

In operation S121, a menu enabling the user to determine whether to receive a push notification may be displayed on the screen, as shown in FIG. 2C. Specifically, when an application to be sold at a discounted price is selected as a result of the voting, the user may be caused to determine whether to receive pushed information on the selected application. When the user determines whether to receive the push notification, the smartphone 1 may further provide the server 2 with information regarding whether to receive the push notification.

When a predetermined voting period of this voting elapses, the server 2 may count votes based on selection values received from the plurality of smartphones 1. Specifically, which target application obtains the highest number of votes may be determined, and an application to be sold at a discounted price may be selected in operation S140.

A single target application may be selected from between two target applications in the method of FIG. 3, but this is merely an example and there is no limitation to the number of applications to be selected. In other words, at least one target application may be selected from among a plurality of target applications.

Additionally, when the application to be sold at a discounted price is selected, the server 2 may generate a message including information on the selected application, and may push the generated message to the smartphone 1.

The pushing needs to be performed to smartphones 1 of users who voted in operation S130. Naturally, the push notification may be skipped with respect to smartphones 1 that respond that users desire to block the push notification in operation S121.

When smartphones 1 that were not used in voting, but that include an application for an access to the server 2 installed therein, respond that users desire to receive the push notification in advance, a selection result may be pushed to the smartphones 1.

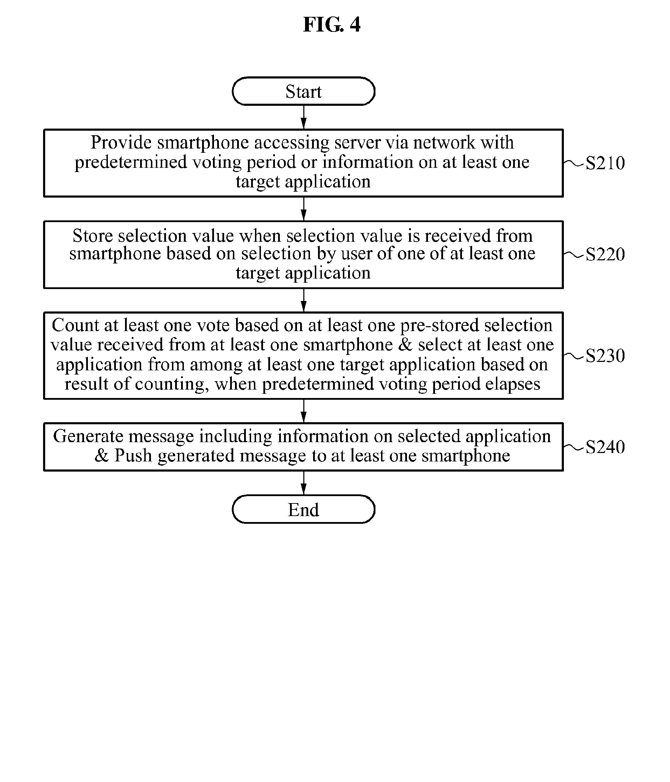

Hereinafter, the method for providing an application at a discounted price through voting in a mobile platform according to the present invention will be described from a different perspective, with reference to FIG. 4. A method for providing an application at a discounted price through voting in a mobile platform, as shown in FIG. 4, may be described from the perspective of the server.

Referring to FIG. 4, in operation S210, the server 2 may store, in advance, the voting period and the information on at least one target application, and may provide the voting period and the information to an application of the smartphone 1 that accesses the server 2 via the network in operation S210.

When a selection value based on selection by the user of one of the at least one target application is received from the smartphone 1, as shown in FIG. 2B, the server 2 may store the received selection value in operation S220. Operation S220 may be repeatedly performed with respect to the plurality of smartphones 1 before the voting period elapses.

Subsequently, when the predetermined voting period elapses, the server 2 may count votes based on a plurality of selection values stored in operation S220. Accordingly, an application with the highest number of votes may be selected as a target for discount sale in operation S230.

When a single application is selected as described above, the server 2 may generate a message including information on the selected application, and may push the generated message to smartphones 1 in operation S240. Desirably, the message may be pushed to smartphones 1 that provide the selection values in operation S220. Naturally, an example in which a user responds that he desires to block the push notification through an interface screen as shown in FIG. 2C may be excluded.

To perform the pushing, the server 2 may generate a message by combining the information on the selected application (namely, information to be included in the message) with a device token and an identifier (ID) of an application to which the message is to be pushed, and may transmit the generated message to the push notification server 3.

Subsequently, the smartphone 1 may access the push notification server 3, and may withdraw a message corresponding to a device token of the smartphone 1, so that the pushing may be realized.

Desirably, the message may further include a name of the selected application, as well as, a discounted price of the selected application, and a discount period for the selected application.

Additionally, there is no limitation to the voting period or the discount period, however, voting may desirably be performed for weekdays, and discount sale may be performed for the weekend including Saturday and Sunday. Accordingly, users spending busy days may be induced to simply vote for the weekdays, and to buy and use a discounted application for the weekend with time to spare.

Furthermore, the voting may enable determination of a discount rate or a discount period, in addition to selection of which application is sold at a discounted price. For example, as the number of votes increases, the discount rate may be increased.

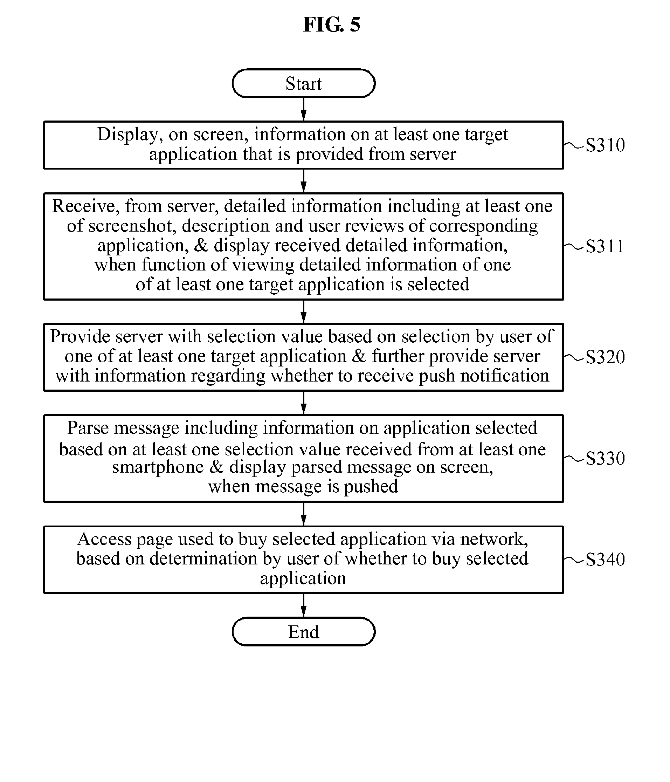

Hereinafter, the method for providing an application at a discounted price through voting in a mobile platform according to the present invention will be described from a different perspective, with reference to FIG. 5. A method for providing an application at a discounted price through voting in a mobile platform, as shown in FIG. 5, will be described from the perspective of the smartphone 1.

Referring to FIG. 5, in operation S310, when an application used to access the platform provided by the server 2 is launched and when the information on at least one target application is provided to the smartphone 1, the smartphone 1 may display, on the screen, the list of the at least one target application, as shown in FIG. 2A in operation S310.

When the user selects an application from the list, the smartphone 1 may receive detailed information of the selected application from the server 2, and may further display the received detailed information as shown in FIG. 2B in operation S311. The detailed information may include a screenshot, a description and user reviews of the selected application, and the like.

Subsequently, when the user selects an application from among the at least one target application by touching the "Vote" button, the smartphone 1 may provide the server 2 with a selection value indicating which application is selected by the user.

When the user determines whether to receive the push notification as shown in FIG. 2C, the smartphone 1 may further provide the server 2 with information regarding whether to receive the push notification in operation S320.

When the server 2 selects an application as a target for discount sale based on a result of counting votes, and pushes a message including information on the selected application, the smartphone 1 may parse the pushed message, and may display the parsed message on the screen in operation S330.

Subsequently, when the user selects a link displayed on the screen to buy the application that is selling at a discounted price, the smartphone 1 may access a page used to buy the application via the network in operation S340.

As described above, the method for providing an application at a discounted price according to the present invention may be recorded in computer-readable media manufactured in the form of computer programs, and may be performed in the smartphone 1 or the server 2.

Additionally, the term "server 2" has been used herein, however does not necessarily indicate a target configured with single hardware, and should be understood to include a collection of server groups interworking with the smartphone 1.

According to the present invention, a new model in which a game application for smartphones is interworking with a social network may be provided.

In particular, users connected via a social network interworking with a game application may be enabled to directly vote during a predetermined period of time, and to determine an application to be sold at a discounted price. Accordingly, intentions of users may be reflected on whether to discount an application and thus, it is possible to increase an interest level and a buying rate.

Accordingly, out of a one-to-one relationship between game content and a user, users in a group connected via a social network may collectively consume and enjoy game content. Additionally, an effect of making a breakthrough may be obtained, in terms of distribution and marketing of trendy game content for smartphones that has a short lifecycle and a relatively short play time.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A method for providing an application at a discounted price through voting in a mobile platform, the method comprising:
providing, by a server, a smartphone with a predetermined voting period or information on at least one target application targeted for voting, the smartphone accessing the server via a network;
displaying, by the smartphone, the received information on the at least one target application on a screen;
providing, by the smartphone, a selection value to the server based on a selection by a user of one of the at least one target application;
counting, by the server, at least one vote based on at least one selection value received from at least one smartphone, and selecting at least one application from among the at least one target application based on a result of the counting, when the predetermined voting period elapses; and
pushing, by the server, a message including information on the selected application to the at least one smartphone.

2. The method of claim 1, further comprising, after the displaying, displaying, on the screen, a menu enabling the user to determine whether to receive a push notification,
wherein the providing of the selection value comprises further providing the server with information regarding whether to receive the push notification determined by the user.

3. The method of claim 2, wherein the pushing comprises pushing, by the server, the message to a smartphone responding that a user of the smartphone desires to receive at least the push notification.

4. A method for providing an application at a discounted price through voting in a mobile platform, the method comprising:
providing, by a server, a smartphone with a predetermined voting period or information on at least one target application targeted for voting, the smartphone accessing the server via a network;
storing, by the server, a selection value when the selection value is received from the smartphone based on a selection by a user of one of the at least one target application;
counting, by the server, at least one vote based on at least one pre-stored selection value received from at least one smartphone, and selecting at least one application from among the at least one target application based on a result of the counting, when the predetermined voting period elapses; and
generating, by the server, a message including information on the selected application, and pushing the generated message to the at least one smartphone.

5. The method of claim 4, wherein the generating comprises generating a message by combining the information on the selected application with a device token and an application name of a smartphone to which the message is to be pushed, and transmitting the generated message to a push notification server, so that the pushing is processed.

6. The method of claim 4, wherein the message comprises a discounted price of the selected application or a discount period for the selected application.

7. The method of claim 6, wherein the discount period comprises a period between Saturday and Sunday of a corresponding week.

8. The method of claim 4, wherein the predetermined voting period comprises a period from Monday to Friday of a corresponding week.

9. The method of claim 4, wherein the counting comprises determining, by the server, a discount rate of the selected application or a discount period for the selected application, based on the result of the counting.

10. A method for providing an application at a discounted price through voting in a mobile platform, the method comprising:
displaying, by a smartphone, on a screen, information on at least one target application targeted for voting, when the information is provided from a server;
providing, by the smartphone, the server with a selection value based on a selection by a user of one of the at least one target application, and further providing the server with information regarding whether to receive a push notification determined by the user; and
parsing, by the smartphone, a message including information on an application selected based on at least one selection value received from at least one smartphone, and displaying the parsed message on the screen, when the message is pushed from the server.

11. The method of claim 10, further comprising, after the displaying, receiving detailed information from the server, and displaying the received detailed information, when the user selects a function of viewing detailed information of one of the at least one target application, the detailed information including at least one of a screenshot, a description and user reviews of a corresponding application.

12. The method of claim 10, further comprising, after the parsing, accessing, by the smartphone, a page used to buy the selected application via a network, based on a determination by the user of whether to buy the selected application.

13. A computer readable recording medium storing a program to cause a computer to implement the method of claim 1.
